# NEUE EUROPÄISCHE PATENTSCHRIFT

(11) **EP 2 749 861 B2**
(45) Veröffentlichungstag und Bekanntmachung des Hinweises auf die Entscheidung über den Einspruch: **16.01.2019**
(45) Hinweis auf die Patenterteilung: 19.08.2015
(21) Anmeldenummer: 13193406.9
(22) Anmeldetag: 19.11.2013
(51) Int. Cl.: G01M 3/02, F04B 51/00, G01M 3/32, G01N 3/12

(54) **Prüfvorrichtung für ein Aussengehäuse einer Pumpe und Verfahren zur Prüfung eines Aussengehäuses einer Pumpe**
Test device for the external housing of a pump and method for testing an external housing of a pump
Dispositif de contrôle pour un boîtier extérieur d'une pompe et procédé de contrôle d'un boîtier extérieur d'une pompe

(30) Priorität: 07.12.2012 EP 12196160
(43) Veröffentlichungstag der Anmeldung: 02.07.2014
(73) Patentinhaber: Sulzer Management AG, 8401 Winterthur (CH)
(72) Erfinder: Meuter, Paul, 8472 Seuzach (CH); Welschinger, Thomas, 78315 Radolfzell (DE); Inforsati, Marcelo, 8404 Winterthur (CH)
(74) Vertreter: Intellectual Property Services GmbH

(56) Entgegenhaltungen:
- CN-B- 101 655 435
- CN-U- 201 891 590
- JP-A- S5 643 531
- JP-A- S62 115 337
- JP-A- 2006 329 803
- US-A- 5 205 157
- US-B2- 7 938 617

## Beschreibung

Die Erfindung betrifft eine Prüfvorrichtung für ein Aussengehäuse einer Pumpe gemäss dem Oberbegriff des unabhängigen Anspruchs 1 und ein Verfahren zur Prüfung eines Aussengehäuses einer Pumpe gemäss dem Oberbegriff des unabhängigen Anspruchs 10.

Prüfeinrichtungen werden beispielsweise bei der Entwicklung und Erprobung von Pumpenbauteilen eingesetzt. Ziel ist es dabei, die Funktionstüchtigkeit von Bauteilen unter realitätsnahen Einsatzbedingungen zu untersuchen, Schwachstellen einer Konstruktion bereits im Vorfeld einer Serienherstellung aufzudecken oder mögliche technische Verbesserungen an einer bestehenden Konstruktion auf ihre Tauglichkeit und auf ihre Dauerhaltbarkeit hin zu untersuchen.

Eine wesentliche Prüfung bei der Entwicklung und dem Bau von Pumpen ist die Druckprüfung von Aussengehäusen von Pumpen, mit welcher der Nachweis einer ausreichenden Festigkeit und Dichtheit des Aussengehäuses erbracht wird. Dazu wird das Aussengehäuse mit einem Prüffluid gefüllt und der Druck langsam bis zur Höhe des Prüfdruckes erhöht. Der Prüfdruck wirkt dann eine gewisse Zeit, während deren Ablauf der Druck nur innerhalb einer vorgegebenen Toleranz fallen darf und das Aussengehäuse kein Prüffluid verlieren darf. Im Anschluss wird geprüft, ob unzulässige plastische Verformungen entstanden sind oder Undichtheiten insbesondere an Schweißnähten, Verschlüssen, Dichtungen oder an Verbindungen (Flansche, Gewinde, Verschraubungen usw.) vorhanden sind.

Üblicherweise wird bei der Druckprüfung das gesamte Aussengehäuses mit dem 1,5fachen Ausgangsdruck der Pumpe, der dem höchsten Druck der Pumpe, also dem Hochdruck, entspricht, geprüft oder der Prüfdruck in Einlass- und Ausgangsdruck aufgeteilt und beispielsweise der Eingangsbereich des Aussengehäuses mit dem Einlassdruck und ein Innenraum des Aussengehäuses mit dem 1,5fachen Ausgangsdruck geprüft. Grund hierfür ist, dass sich innerhalb des Aussengehäuses eine oder mehrere unter Hochdruck, also dem einfachen Ausgangsdruck, stehende Druckkammern befinden. Diese unter Hochdruck stehenden Druckkammern gehen einher mit hohen technischen Anforderungen an die Aussengehäuse, beispielsweise sind grössere Wandstärken und Durchmesser der Aussengehäusen nötig, wodurch die Kosten für die Pumpe steigen.

Eine Prüfvorrichtung für ein Aussengehäuse einer Pumpe ist aus den Dokumenten JP S5643531 und US 5205157 bekannt.

Ausgehend von diesem Stand der Technik ist es daher eine Aufgabe der vorliegenden Erfindung eine Prüfvorrichtung und ein Verfahren vorzuschlagen, die es ermöglichen ein Aussengehäuse bedarfsgerecht und effizient zu prüfen.

Erfindungsgemäß wird diese Aufgabe durch eine Prüfvorrichtung für ein Aussengehäuse einer Pumpe mit den Merkmalen des Anspruchs 1 und ein Verfahren zur Prüfung eines Aussengehäuses einer Pumpe mit den Merkmalen des Anspruchs 10 gelöst.

Erfindungsgemäss wird eine Prüfvorrichtung für ein Aussengehäuse einer Pumpe vorgeschlagen, wobei das Aussengehäuse einen Ausgang aufweist. Die Prüfvorrichtung umfasst ein Trennelement, ein erstes und ein zweites Abschlusselement, wobei das erste und zweite Abschlusselement jeweils ein axiales Ende des Aussengehäuses in abdichtender Weise verschliessen, eine Mitteldruckleitung, die im ersten oder zweiten Abschlusselement angeordnet ist und ein Begrenzungselement, wobei das Begrenzungselement den Ausgang ausserhalb des Aussengehäuses verschliesst und im Begrenzungselement eine Hochdruckleitung angeordnet ist. Das Trennelement ist derart ausgeführt und im Aussengehäuse angeordnet, dass das Trennelement den Ausgang des Aussengehäuses begrenzt und das Aussengehäuse in einen ersten Druckbereich und einen zweiten Druckbereich unterteilt ist, wobei der erste und zweite Druckbereich als voneinander unabhängige Druckbereiche ausgebildet sind. Das Trennelement ist zweiteilig ausgeführt und ein Teil des Trennelements ist mit dem ersten oder mit dem zweiten Abschlusselement verbunden.

Die Prüfvorrichtung für ein Aussengehäuse einer Pumpe, wobei das Aussengehäuse einen Ausgang aufweist, umfasst ein Trennelement, ein erstes und ein zweites Abschlusselement, wobei das erste und zweite Abschlusselement jeweils ein axiales Ende des Aussengehäuses in abdichtender Weise verschliessen, eine Mitteldruckleitung, die im ersten oder zweiten Abschlusselement angeordnet ist und ein Begrenzungselement, wobei das Begrenzungselement den Ausgang ausserhalb des Aussengehäuses verschliesst und im Begrenzungselement eine Hochdruckleitung angeordnet ist.

Das Aussengehäuse kann beispielsweise als ein hauptsächlich hohlzylinderförmiges oder rohrförmiges Gehäuse ausgeführt sein, bei welchem der Ausgang beispielsweise als zylinderförmige Öffnung im Aussengehäuse angeordnet ist. Das Aussengehäuse kann beispielsweise an den beiden axialen Enden mittels des ersten und ein zweiten Abschlusselements geschlossen oder geöffnet werden. Das erste und zweite Abschlusselement können zylinderförmig und einteilig ausgebildet sein, wobei beispielsweise ein Innendurchmesser des ersten und / oder zweiten Abschlusselement einem Innendurchmesser des Aussengehäuses entsprechen kann. Das erste und zweite Abschlusselement können im Aussengehäuse frei in axiale Richtung verschoben werden, so dass eine beliebige Anordnung im Bereich der axialen Enden möglich ist. Das erste und zweite Abschlusselement können beispielsweise den Innenbereich vom Aussenbereich des Aussengehäuses trennen und somit verschiedenen Druckbereiche, beispielsweise ausserhalb des Aussengehäuses einen Niederdruckbereich definieren. Zwischen dem ersten und zweiten Abschlusselement und dem Aussengehäuse kann beispielsweise jeweils ein Dichtelement angeordnet sein, so dass die axialen Enden des Aussengehäuses in abdichtender Weise verschlossen werden können. Die Mitteldruckleitung kann beispielsweise als Öffnung oder Bohrung, die beispielsweise mittels eines Verschlusses verschliessbar ist, im ersten und / oder zweiten Abschlusselement angeordnet sein. Die Mitteldruckleitung kann aber auch im ersten und / oder zweiten Abschlusselement und in der Welle angeordnet sein. Ebenso können eine, mehrere oder auch unterschiedliche Mitteldruckleitungen vorgesehen sein, so dass im Betriebzustand der Prüfvorrichtung ein Prüffluid über eine Mitteldruckleitung zuleitbar und über eine weitere Mitteldruckleitung ableitbar ist.

Das Begrenzungselement verschliesst den Ausgang des Aussengehäuses in abdichtender Weise und ist ausserhalb des Aussengehäuses angeordnet. Das Begrenzungselement kann dazu beispielsweise mit dem Aussengehäuse verschraubt oder mittels Zapfen gesteckt werden. Die Hochdruckleitung kann beispielsweise als Öffnung oder Bohrung, die beispielsweise mittels eines Verschlusses verschliessbar ist, im Begrenzungselement angeordnet sein. Ebenso können eine, mehrere oder auch unterschiedliche Hochdruckleitungen vorgesehen sein, so dass im Betriebzustand der Prüfvorrichtung ein Prüffluid über eine Hochdruckleitung zuleitbar und über eine weitere Hochdruckleitung ableitbar ist.

Die Pumpe, für welche das Aussengehäuse verwendet wird, kann beispielsweise einer erste und zweite Teilpumpe umfassen, die wiederum aus einem oder mehreren Pumpenmodulen gebildet wird und die im Aussengehäuse angeordnet werden. Die einzelnen Pumpenmodule können beispielsweise miteinander verschraubt oder aber einfach aneinander angefügt werden. Das Trennelement ist an einer Position in der Prüfvorrichtung angeordnet, die sich im Einbauzustand zwischen der ersten und zweiten Teilpumpe befindet.

Erfindungsgemäss ist das Trennelement derart ausgeführt und im Aussengehäuse angeordnet, dass das Trennelement den Ausgang des Aussengehäuses begrenzt und das Aussengehäuse in einen ersten Druckbereich und einen zweiten Druckbereich unterteilt ist, wobei der erste und zweite Druckbereich als voneinander unabhängige Druckbereiche ausgebildet sind.

Das Trennelement kann zylinderförmig ausgebildet sein, wobei beispielsweise ein Aussendurchmesser des Trennelements einem Innendurchmesser des Aussengehäuses entspricht. Das Trennelement kann beispielsweise im Aussengehäuse in axiale Richtung verschoben werden, so dass eine beliebige Anordnung innerhalb des Aussengehäuses möglich ist. Das Trennelement und das Aussengehäuse können beispielsweise miteinander verschraubt werden. Es ist aber auch möglich, dass das Trennelement ohne weitere Befestigungselemente in das Aussengehäuse eingefügt wird.

Das Trennelement ist derart am Ausgang angeordnet, dass der erste Druckbereich durch das Trennelement, das Begrenzungselement und das Aussengehäuse begrenzt ist. Der erste Druckbereich kann mittels der Hochdruckleitung mit einem Druck beaufschlagt werden, der beispielsweise im Betriebszustand der Prüfvorrichtung dem höchsten Druck, also einem Hochdruck, in der gesamten Prüfvorrichtung entspricht. Der erste Druckbereich ist somit als ein Hochdruckbereich ausgebildet. Der zweite Druckbereich wird durch das Trennelement, das Aussengehäuse und das erste und / oder zweite Abschlusselement begrenzt, wobei keine Strömungsverbindung zum ersten Druckbereich besteht. Der zweite Druckbereich kann mittels der Mitteldruckleitung mit einem Druck beaufschlagt werden, der insbesondere kleiner als der Druck im ersten Druckbereich ist, insbesondere ungefähr dem halben Druck, also einem Mitteldruck, des ersten Druckbereichs entspricht. Im Betriebszustand der Prüfeinrichtung herrscht somit im ersten Druckbereich ein höherer Druck als im zweiten Druckbereich.

Vorteil ist, dass mittels der Prüfvorrichtung bedarfsgerecht und effizient geprüft werden kann. Aufgrund des Begrenzens des Hochdruckbereiches auf den ersten Druckbereich ist, im Gegensatz zu aus dem Stand der Technik bekannten Prüfvorrichtungen, die das gesamte Aussengehäuse mit Hochdruck prüfen, eine Prüfung des ersten Druckbereichs mit einem Hochdruck und des zweiten Druckbereichs mit einem Mitteldruck möglich. Dadurch kann das Aussengehäuse im zweiten Druckbereich auf einen geringeren Druck, den Mitteldruck, ausgelegt werden und so beispielsweise die Wandstärken, die Grösse des Aussengehäuses oder Schraubengrössen gegenüber bekannten Grössen und Auslegungen reduziert werden.

In Ausgestaltung der Erfindung ist das Trennelement derart im Aussengehäuse angeordnet, dass der zweite Druckbereich in eine erste und zweite Druckkammer unterteilt ist. Die erste und zweite Druckkammer sind dabei mittels einer Ausgleichsleitung verbunden und die Ausgleichsleitung ist im Trennelement angeordnet.

Das Trennelement kann derart im Aussengehäuse angeordnet sein, dass der zweite Druckbereich beispielsweise in eine erste und zweite Druckkammer unterteilt ist. Die erste Druckkammer kann somit durch das Trennelement, das erste oder zweite Abschlusselement und das Aussengehäuse begrenzt sein. Die zweite Druckkammer kann somit durch das Trennelement, das erste oder zweite Abschlusselement und das Aussengehäuse begrenzt sein. Die Ausgleichsleitung kann beispielsweise als Bohrung oder allgemeiner als eine Strömungsverbindung ausgeführt und im Trennelement angeordnet sein. Aufgrund der Ausgleichsleitung ist ein Druckausgleich zwischen der ersten und zweiten Druckkammer möglich, so dass der Mitteldruck in beiden Druckkammern einem gleichen Druckniveau entspricht.

In Ausgestaltung der Erfindung umfasst das Trennelement eine umlaufende Nut und die umlaufende Nut ist am Ausgang des Aussengehäuses angeordnet.

Die Nut kann beispielsweise als eine Ausnehmung entlang eines Umfangs des Trennelements ausgebildet sein und in axiale Richtung des Aussengehäuses beispielsweise einen dreieckigen, rechteckigen oder anderen inneren Querschnitt aufweisen. Die Nut ist derart am Ausgang angeordnet sein, dass ein mittels der Nut gebildetes Volumen ein Teil des ersten Druckbereichs ist.

In Ausgestaltung der Erfindung ist das Trennelement mit einer Welle verbunden. Die Welle ist axial im Aussengehäuse angeordnet und mit dem ersten und zweiten Abschlusselement verbunden.

Unter einer Welle ist ein zylinderförmiges oder stangenförmiges Objekt zu verstehen, das beispielsweise in einer Pumpe als Rotorwelle ausgeführt sein kann. Das Trennelement kann beispielsweise eine zylinderförmige Öffnung aufweisen, durch welche die Welle geführt wird. Das Trennelement kann mit der Welle beispielsweise verschweisst, verschraubt, verzapft oder anders verbunden sein. Die Welle kann an den axialen Enden mit dem ersten und / oder zweiten Abschlusselement beispielsweise verschraubt sein. In der Welle kann beispielsweise eine Bohrung ausgeführt und mit der Mitteldruckleitung verbunden sein, so dass der zweite Druckbereich mit Druck beaufschlagbar ist.

In Ausgestaltung der Erfindung sind der erste Druckbereich und der zweite Druckbereich mittels eines Dichtelements voneinander getrennt. Das Dichtelement ist zwischen Trennelement und Aussengehäuse angeordnet.

Da der erste Druckbereich einem Hochdruckbereich und der zweite Druckbereich einem Mitteldruckbereich entsprechen, ist unter einer Trennung der beiden Bereiche mittels eines Dichtelements zu verstehen, dass trotz einer Druckdifferenz zwischen dem ersten und zweiten Druckbereich quasi kein Druckausgleich stattfindet. Das Dichtelement kann zwischen dem Trennelement und dem Aussengehäuse angeordnet sein. Das Dichtelement ist als eine Dichtung, insbesondere als ein O-Ring aus einem ElastomerWerkstoff oder aus Metall, ausgeführt. Es ist auch möglich, dass insbesondere zwei oder mehr Dichtelemente, insbesondere O-Ringe nebeneinander angeordnet sind. Das Dichtelement ist zwischen oder am Trennelement und / oder dem Aussengehäuse angeordnet, da diese den ersten und zweiten Druckbereich räumlich begrenzen. Das Dichtelement kann dabei beispielsweise in einer Nut des Trennelements oder des Aussengehäuses angeordnet sein. Das Dichtelement kann auch als eine andersartige Dichtung, beispielsweise in Form einer Metalldichtung, Flachdichtung oder eine Beschichtung beispielsweise mit einem elastischen Material ausgeführt sein. Bei Verwendung eines Dichtelements kann eine besonders gute Trennung und Abdichtung des ersten und zweiten Druckbereichs erreicht werden.

Erfindungsgemäss ist das Trennelement zweiteilig ausgeführt und ein Teil des Trennelements ist mit dem ersten oder zweiten Abschlusselement verbunden.

Das Trennelement ist zweiteilig ausgeführt, es kann also beispielsweise ein Teil des Trennelements am Aussengehäuse angeordnet und das Dichtelement zwischen diesem Teil des Trennelements und dem Aussengehäuse angeordnet sein. Ein Teil des Trennelements kann mit dem ersten oder zweiten Abschlusselement verbunden sein, beispielsweise mittels eines Verbindungselements, insbesondere mittels einer Stange oder einem Rohr. Das Verbindungselement ist mit einem Teil des Trennelements und dem ersten oder zweiten Abschlusselement verbunden, kann also insbesondere verschraubt sein. Dadurch wird das erste und / oder zweite Abschlusselement mit der Kraft des Mitteldrucks und einer Betriebskraft belastet, wobei die Betriebskraft die durch den Hochdruck im Betriebszustand entstehenden Kräfte abbildet. Vorteil ist mittels dieser Anordnung der Prüfvorrichtung somit insgesamt die realen Kräfteverhältnisse, beispielsweise einer Pumpe im Betriebszustand, abgebildet werden können.

Die Erfindung betrifft im Weiteren ein Verfahren zur Prüfung eines Aussengehäuses einer Pumpe, wobei das Aussengehäuse einen Ausgang aufweist, und die Prüfvorrichtung ein Trennelement, ein erstes Abschlusselement und ein zweites Abschlusselement, eine Mitteldruckleitung, die im ersten oder zweiten Abschlusselement angeordnet ist, und ein Begrenzungselement umfasst, wobei im Begrenzungselement eine Hochdruckleitung angeordnet ist.

Erfindungsgemäss wird jeweils ein axiales Ende des Aussengehäuses mittels des ersten und zweiten Abschlusselements in abdichtender Weise verschlossen. Das Trennelement wird derart ausgeführt und im Aussengehäuse angeordnet, dass der Ausgang des Aussengehäuse begrenzt und das Aussengehäuse in einen ersten Druckbereich und einen zweiten Druckbereich unterteilt wird, wobei das Trennelement zweiteilig ausgeführt ist und ein Teil des Trennelements mit dem ersten öder zweiten Abschlusselement verbunden, und wobei der erste und der zweite Druckbereich nacheinander oder gleichzeitig als voneinander unabhängige Druckbereiche mit Druck beaufschlagt werden und der Druck im ersten und zweiten Druckbereich gemessen wird.

Das Verfahren kann beispielsweise mit der oben beschriebenen Prüfvorrichtung durchgeführt werden.

In Ausgestaltung der Erfindung wird ein Prüffluid mittels der Mitteldruckleitung in den zweiten Druckbereich und mittels der Hochdruckleitung in den ersten Druckbereich zugeführt und abgeleitet.

Das Prüffluid kann flüssig oder gasförmig sein, insbesondere als Luft, Wasser oder ein Wassergemisch ausgeführt sein. Das Prüffluid kann mittels einer Fördereinrichtung, beispielsweise einer Pumpe mit einer Leitung oder einem Rohr, an die Prüfvorrichtung geleitet werden und / oder die erste und zweite Druckkammer mit dem Prüffluid füllen. Ausserdem ist es beispielsweise möglich mittels der Fördereinrichtung einen Kreislauf für das Prüffluid aufrecht zu halten. Die Mitteldruck- und Hochdruckleitung können hierzu mit der Fördereinrichtung strömungsverbunden sein.

In Ausgestaltung der Erfindung wird der erste Druckbereich mit einem höheren Druck als der zweite Druckbereich beaufschlagt. Ausserdem wird das Trennelement derart im Aussengehäuse angeordnet, dass der zweite Druckbereich in eine erste und zweite Druckkammer unterteilt wird, wobei in der ersten und zweiten Druckkammer ein gleiches Druckniveau ausgebildet wird.

Weitere vorteilhafte Massnahmen und bevorzugte Verfahrensführungen ergeben sich aus den abhängigen Ansprüchen. Im Folgenden wird die Erfindung sowohl in apparativer als auch in verfahrenstechnischer Hinsicht anhand von Ausführungsbeispielen unter Bezugnahme auf die Zeichnung näher erläutert. In der schematischen Zeichnung zeigen:
- Fig. 1: ein erstes Ausführungsbeispiel der Prüfvorrichtung;
- Fig. 2: eine Ausführungsform einer Prüfvorrichtung, die nicht Gegenstand der Erfindung ist.

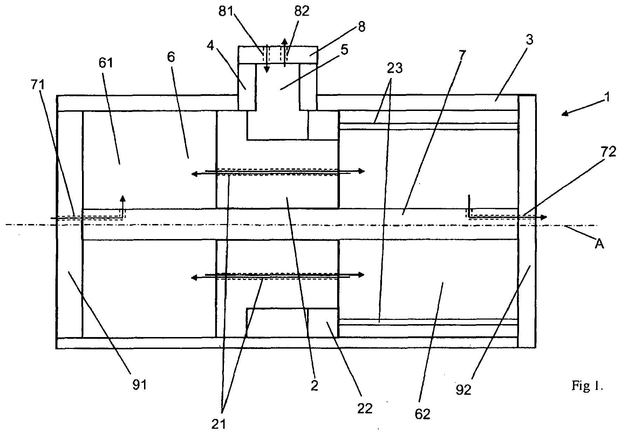

Fig. 1 weist eine Prüfvorrichtung 1 und ein als ein Gehäuse ausgeführtes Aussengehäuse 3 einer Pumpe mit einem Ausgang 4 des Aussengehäuses 3 auf. Das Aussengehäuse 3 ist hauptsächlich als ein hohlzylinderförmiges oder rohrförmiges Gehäuse ausgeführt. Die Prüfvorrichtung 1 umfasst ein Trennelement 2, ein erstes und ein zweites Abschlusselement 91,92, eine Mitteldruckleitung 71,72 und ein Begrenzungselement 8. Das erste und zweite Abschlusselement 91,92 verschliessen jeweils ein axiales Ende des Aussengehäuses 3 in abdichtender Weise. Im ersten und zweiten Abschlusselement 91,92 sind die Mitteldruckleitungen 71,72 angeordnet, wobei, wie in Fig. 1 dargestellt, mittels einer Mitteldruckleitung 71 ein Prüffluid zugeleitet und mittels einer weiteren Mitteldruckleitung 72 abgeleitet oder entlüftet wird.

Das Begrenzungselement 8 verschliesst den Ausgang 4 ausserhalb des Aussengehäuses 3 in abdichtender Weise. Im Begrenzungselement 8 ist eine Hochdruckleitung 81,82 angeordnet, wobei, wie in Fig. 1 dargestellt, mittels einer Hochdruckleitung 81 ein Prüffluid zugeleitet und mittels einer weiteren Hochdruckleitung 82 abgeleitet oder entlüftet wird.

Das Trennelement 2 ist als zylinderförmiges Trennelement 2 ausgebildet und ein Innendurchmesser des Trennelements 2 entspricht einem Innendurchmesser des Aussengehäuses 3. Das Trennelement 2 ist derart im Aussengehäuse 3 und am Ausgang 4 angeordnet, dass das Trennelement 2, das Begrenzungselement 8 und das Aussengehäuse 3 einen ersten Druckbereich 5 begrenzen. Der erste Druckbereich 5 ist als ein Hochdruckbereich ausgeführt. Ausserdem umfasst das Trennelement 2 eine umlaufende Nut, die am Ausgang 4 des Aussengehäuses 3 angeordnet ist und deren Volumen als ein Teil des ersten Druckbereichs 5 ausgebildet ist.

Aufgrund der Anordnung des Trennelement 2 begrenzen das Trennelement 2, das Aussengehäuse 3 und das erste und / oder zweite Abschlusselement 91,92 einen zweiten Druckbereich 6, wobei zwischen dem ersten Druckbereich 5 und zweiten Druckbereich 6 keine Strömungsverbindung besteht und somit kein Druckausgleich möglich ist. Der zweite Druckbereich 6 ist als ein Mitteldruckbereich ausgeführt. Da das Trennelement 2 den zweiten Druckbereich 6 in eine erste und zweite Druckkammer 61,62 unterteilt, ist im Trennelement 2 eine Ausgleichsleitung 21 angeordnet, so dass sich ein Druckniveau in der ersten und zweiten Druckkammer 61,62 angleicht.

Das Trennelement 2 ist mittels eine Befestigungselements mit einer Welle 7 verbunden, beispielsweise verschweisst oder mittels einer Schraube verschraubt (nicht dargestellt). Die Welle 7 ist wiederum mit dem ersten und zweiten Abschlusselement 91,92 verbunden, beispielsweise mittels einer Schraube (nicht dargestellt). Das Trennelement 2 ist zweiteilig ausgeführt und ein Teil 22 des Trennelements ist mittels eines Verbindungselements 23 mit dem ersten oder zweiten Abschlusselement 91,92 verbunden. Das Verbindungselement 23 wiederum ist mit einem Teil 22 des Trennelements und dem ersten oder zweiten Abschlusselement 91, 92 mittels eines Befestigungselements (nicht dargestellt), beispielsweise Schrauben, verbunden.

Die Welle 7 ist in eine axiale Richtung entlang der Achse A angeordnet. Ausserdem ist die eine Mitteldruckleitung 71 im ersten Abschlusselement 91 und der Welle 7 und eine weitere Mitteldruckleitung 72 im zweiten Abschlusselement 92 und der Welle 7 angeordnet. Dabei ist die eine Mitteldruckleitung 71 mit der ersten Druckkammer 61 und die weitere Mitteldruckleitung 72 mit der zweiten Druckkammer 62 strömungsverbunden.

Eine Trennung oder Abdichtung des ersten Druckbereichs 5, des zweiten Druckbereichs 6 und eines ausserhalb des Aussengehäuses 3 liegenden Niederdruckbereichs mittels eines Dichtelements wird im Folgenden beschrieben, ist jedoch in Fig. 1 nicht dargestellt. Unter einer Trennung des ersten Druckbereichs 5, des zweiten Druckbereichs 6 und des Niederdruckbereichs ist zu verstehen, dass zwischen den Druckbereichen kein oder nur ein geringer Druckausgleich stattfindet. Der erste Druckbereich 5 und zweite Druckbereich 6 sind mittels eines Dichtelements (nicht dargestellt) voreinander getrennt. Das Trennelement 2 wird durch das Aussengehäuse 3 abgeschlossen und es besteht ein Kontakt zwischen einer äusseren Dichtfläche des Trennelements 2 und einer inneren Dichtfläche des Aussengehäuses 3.

Ebenso sind der zweite Druckbereich 6 und der Niederdruckbereich voneinander getrennt. Das erste Abschlusselement 91 wird durch das Aussengehäuse abgeschlossen und es besteht ein Kontakt zwischen einer äusseren Dichtfläche des ersten Abschlusselements 91 und einer inneren Dichtfläche des Aussengehäuses 3. Das zweite Abschlusselement 92 hingegen schliesst das Aussengehäuse 3 ab und es besteht ein Kontakt zwischen einer äusseren Dichtfläche des Aussengehäuses 3 und einer inneren Dichtfläche des zweiten Abschlusselements 92. Das erste und zweite Abschlusselement 91,92 können dabei auch umgekehrt angeordnet werden.

Die äusseren und / oder inneren Dichtfläche des Trennelements 2, des Aussengehäuses 3, des Begrenzungselement 8 und des ersten und zweiten Abschlusselement 91,92 weisen eine Ausnehmung auf, beispielsweise eine Nut (nicht dargestellt), in der ein O-Ring (nicht dargestellt) aus einem Elastomer-Material angeordnet ist. Parallel zu einem dieser O-Ring kann auch ein zweiter O-Ring angeordnet sein.

Im Folgenden wird anhand Fig. 1 ein Verfahren zur Prüfung eines Aussengehäuses 3 einer Pumpe vorgestellt. Der Fluss eines Prüffluids in der Prüfvorrichtung 1 wird durch Pfeile dargestellt, wobei den Pfeilen kein Bezugszeichen zugeordnet ist. Das Verfahren ist auf alle weiteren erfindungsgemässen Prüfvorrichtungen 1 übertragbar.

Das Trennelement 2 wird derart ausgeführt und im Aussengehäuse 3 angeordnet, dass der Ausgang 4 des Aussengehäuses 3 begrenzt und das Aussengehäuse 3 in einen ersten Druckbereich 5 und einen zweiten Druckbereich 6 unterteilt wird. Der erste Druckbereich 5 und der zweite Druckbereich 6 werden nacheinander oder gleichzeitig als voneinander unabhängige Druckbereiche mit Druck beaufschlagt.

Der erste Druckbereich 5 wird mittels einer Hochdruckleitung 81,82 mit einem Druck beaufschlagt. Der Druck im ersten Druckbereich 5 entspricht dem höchsten Druck in der gesamten Prüfvorrichtung 1. Vor einer Prüfung wird zunächst entlüftet, indem die Zuleitung 81 und Ableitung 82 beide geöffnet sind. Im Anschluss wird das Prüffluid mittels der Zuleitung 81 in den ersten Druckbereich geleitet und gleichzeitig über die Ableitung 82 abgeleitet, so dass ein geschlossener Kreislauf entsteht. Eine Prüfung des Hochdruckbereiches erfolgt bei einem Druck der grösser, insbesondere dem 1,5-fachen des Drucks entspricht, auf welchen das Aussengehäuse 3 ausgelegt ist. Eine weitere Möglichkeit, das Verfahren nach dem Entlüften durchzuführen ist den ersten Druckbereich 5 mittels der Hochdruckleitung 81,82 mit einem gewünschten Prüfdruck Druck zu beaufschlagen, die Hochdruckleitung 81,82 zu verschliessen und am Ende der Prüfzeit den Druck wieder abzubauen, indem die Zu- 81 und / oder Ableitung 82 geöffnet werden. Mittels des Verfahrens wird das Aussengehäuse 3 auf Festigkeit, Dichtheit und Spannungsabbau geprüft.

Der zweite Druckbereich 6 wird mittels der Mitteldruckleitung 71,72 mit einem Druck beaufschlagt. Der zweite Druckbereich 6 wird mit einem kleineren Druck als der erste Druckbereich 5 beaufschlagt, insbesondere ungefähr dem halben Druck des ersten Druckbereichs 5. Wird der zweite Druckbereich 6 mit Druck beaufschlagt und wird das Prüffluid mittels der Mitteldruckleitung 71,72 in die erste Druckkammer 61 eingeleitet, dann erfolgt ein Druckausgleich zwischen der ersten Druckkammer 61 und der zweiten Druckkammer 62 mittels der Ausgleichsleitung 21. Im Weiteren werden bei der Prüfung des zweiten Druckbereichs 6 die gleichen Verfahrensschritte wie bei der Prüfung des ersten Druckbereichs 5 durchgeführt. Während der Durchführung des Verfahrens werden die Drücke im ersten Druckbereich 5 und zweiten Druckbereich 6 gemessen.

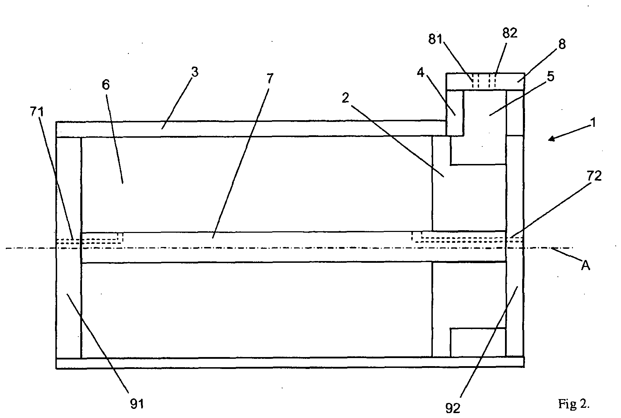

Fig. 2 zeigt eine Ausführungsform der Prüfvorrichtung 1, welche nicht Gegenstand der Erfindung ist. In dieser Ausführungsform befindet sich der Ausgang 4 des Aussengehäuses 3 an einem axialen Ende des Aussengehäuses 3. Das Trennelement 2 unterteilt das Aussengehäuse 3 somit auch nicht in eine erste und zweite Druckkammer 61,62, so dass keine Ausgleichleitung 21 vorhanden ist. Es wird ein erster Druckbereich 5 durch das Begrenzungselement 8, das Aussengehäuse 3, das erste oder zweite Abschlusselement 91,92 und das Trennelement 2 begrenzt. Der zweite Druckbereich 6 wird durch das Trennelement 2, das Aussengehäuse 3 und das erste oder zweite Abschlusselement 91,92 begrenzt.

## Patentansprüche

1. Prüfvorrichtung für ein Aussengehäuse (3) einer Pumpe, wobei das Aussengehäuse (3) einen Ausgang (4) aufweist, und die Prüfvorrichtung (1)
- ein Trennelement (2),
- ein erstes und ein zweites Abschlusselement (91,92), wobei das erste und zweite Abschlusselement (91,92) jeweils ein axiales Ende des Aussengehäuses (3) in abdichtender Weise verschliessen, umfasst, **dadurch gekennzeichnet, dass** die Prüfvorrichtung (1)
- eine Mitteldruckleitung (71,72), die im ersten oder zweiten Abschlusselement (91,92) angeordnet ist und
- ein Begrenzungselement (8), wobei das Begrenzungselement (8) den Ausgang (4) ausserhalb des Aussengehäuses (3) verschliesst und im Begrenzungselement (8) eine Hochdruckleitung (81,82) angeordnet ist, umfasst
und das Trennelement (2) derart ausgeführt und im Aussengehäuse (3) angeordnet ist, dass das Trennelement (2) den Ausgang (4) des Aussengehäuses (3) begrenzt und das Aussengehäuse (3) in einen ersten Druckbereich (5) und einen zweiten Druckbereich (6) unterteilt ist, wobei der erste Druckbereich (5) und zweite Druckbereich (6) als voneinander unabhängige Druckbereiche ausgebildet sind, und das Trennelement (2) zweiteilig ausgeführt ist und ein Teil (22) des Trennelements mit dem ersten oder zweiten Abschlusselement (91,92) verbunden ist.

2. Prüfvorrichtung nach Anspruch 1, wobei das Trennelement (2) derart im Aussengehäuse (3) angeordnet ist, dass der zweite Druckbereich (6) in eine erste Druckkammer (61) und eine zweite Druckkammer (62) unterteilt ist.

3. Prüfvorrichtung nach Anspruch 2, wobei die erste und zweite Druckkammer (61,62) mittels einer Ausgleichsleitung (21) verbunden sind.

4. Prüfvorrichtung nach Anspruch 3, wobei die Ausgleichsleitung (21) im Trennelement (2) angeordnet ist.

5. Prüfvorrichtung nach einem der vorangehenden Ansprüche, wobei das Trennelement (2) eine umlaufende Nut umfasst und die umlaufende Nut am Ausgang (4) des Aussengehäuses (3) angeordnet ist.

6. Prüfvorrichtung nach einem der vorangehenden Ansprüche, wobei das Trennelement (2) mit einer Welle (7) verbunden ist.

7. Prüfvorrichtung nach Anspruch 6, wobei die Welle (7) axial im Aussengehäuse (3) angeordnet ist und mit dem ersten und zweiten Abschlusselement (91,92) verbunden ist.

8. Prüfvorrichtung nach einem der vorangehenden Ansprüche, wobei der erste Druckbereich (5) und der zweite Druckbereich (6) mittels eines Dichtelements voneinander getrennt sind.

9. Prüfvorrichtung nach einem der vorangehenden Ansprüche, wobei das Dichtelement zwischen Trennelement (2) und Aussengehäuse (3) angeordnet ist.

10. Verfahren zur Prüfung eines Aussengehäuses (3) einer Pumpe, wobei das Aussengehäuse (3) einen Ausgang (4) aufweist,
und die Prüfvorrichtung (1)
- ein Trennelement (2),
- ein erstes Abschlusselement (91) und ein zweites Abschlusselement (92) umfasst, **dadurch gekennzeichnet, dass** die Prüfvorrichtung (1)
- eine Mitteldruckleitung (71,72), die im ersten oder zweiten Abschlusselement (91,92) angeordnet ist,
- ein Begrenzungselement (8), wobei im Begrenzungselement (8) eine Hochdruckleitung (81,82) angeordnet ist,
umfasst,
und jeweils ein axiales Ende des Aussengehäuses (3) mittels des ersten und zweiten Abschlusselements (91,92) in abdichtender Weise verschlossen wird, das Trennelement (2) derart ausgeführt und im Aussengehäuse (3) angeordnet wird, dass der Ausgang (4) des Aussengehäuse (3) begrenzt und das Aussengehäuse (3) in einen ersten Druckbereich (5) und einen zweiten Druckbereich (6) unterteilt wird, wobei das Trennelement (2) zweiteilig ausgeführt ist und ein Teil (22) des Trennelements mit dem ersten oder zweiten Abschlusselement (91,92) verbunden ist, und der erste Druckbereich (5) und der zweite Druckbereich (6) nacheinander oder gleichzeitig als voneinander unabhängige Druckbereiche mit Druck beaufschlagt werden und der Druck im ersten Druckbereich (5) und zweiten Druckbereich (6) gemessen wird.

11. Verfahren nach Anspruch10, wobei ein Prüffluid mittels der Mitteldruckleitung (71,72) in den zweiten Druckbereich (6) und mittels der Hochdruckleitung (81,82) in den ersten Druckbereich (5) zugeführt und abgeleitet wird.

12. Verfahren nach Anspruch 10 oder11, wobei der erste Druckbereich (5) mit einem höheren Druck als der zweite Druckbereich (6) beaufschlagt wird.

13. Verfahren nach einem der Ansprüche 10 bis 12, wobei das Trennelement (2) derart im Aussengehäuse (3) angeordnet wird, dass der zweite Druckbereich (6) in eine erste Druckkammer (61) und zweite Druckkammer (62) unterteilt wird.

14. Verfahren nach Anspruch13, wobei in der ersten und zweiten Druckkammer (61,62) ein gemeinsames Druckniveau ausgebildet wird.

## Claims

1. A testing apparatus for an outer housing (3) of a pump, wherein the outer housing (3) has an outlet (4), and the testing apparatus (1) includes
- a separation element (2);
- a first and a second closure element (91,92), wherein the first and second closure elements (91, 92) respectively close an axial end of the outer housing (3) in a sealing manner;
**characterized in that** the testing apparatus (1) further includes
- a middle pressure line (71, 72) which is arranged in the first or the second closure element (91, 92); and
- a bounding element (8), wherein the bounding element (8) closes the outlet (4) outside of the outer housing (3) and wherein a high pressure line (81, 82) is arranged in the bounding element (8), and
the separation element (2) is configured and arranged in the outer housing (3) such that the separation element (2) bounds the outlet (4) of the outer housing (3) and the outer housing (3) is divided into a first pressure region (5) and a second pressure region (6), wherein the first pressure region (5) and the second pressure region (6) are configured as pressure regions independent from one another, and the separation element (2) is of two-part design and a part (22) of the separation element is connected to the first or the second closure element (91, 92).

2. A testing apparatus in accordance with claim 1, wherein the separation element (2) is arranged in the outer housing (3) such that the second pressure region (6) is divided into a first pressure chamber (61) and a second pressure chamber (62).

3. A testing apparatus in accordance with claim 2, wherein the first and second pressure chambers (61,62) are connected by means of a compensation line (21).

4. A testing apparatus in accordance with claim 3, wherein the compensation line (21) is arranged in the separation element (2).

5. A testing apparatus in accordance with any one of the preceding claims, wherein the separation element (2) includes a circumferential groove and the circumferential groove is arranged at the outlet (4) of the outer housing (3).

6. A testing apparatus in accordance with any one of the preceding claims, wherein the separation element (2) is connected to a shaft (7).

7. A testing apparatus in accordance with claim 6, wherein the shaft (7) is axially arranged in the outer housing (3) and is connected to the first and second closure elements (91, 92).

8. A testing apparatus in accordance with any one of the preceding claims, wherein the first pressure region (5) and the second pressure region (6) are separated from one another by means of a sealing element.

9. A testing apparatus in accordance with any one of the preceding claims, wherein the sealing element is arranged between the separation element (2) and the outer housing (3).

10. A method for testing an outer housing (3) of a pump, wherein the outer housing (3) has an outlet (4),
and the testing apparatus (1) includes a
- separation element (2);
- a first closure element (91) and a second closure element (92), **characterized in that** the testing apparatus (1) further includes
- a middle pressure line (71, 72) which is arranged in the first or the second closure element (91, 92);
- a bounding element (8), wherein a high-pressure line (81, 82) is arranged in the bounding element (8),
and wherein an axial end of the outer housing (3) is respectively closed in a sealing manner by means of the first and second closure elements (91, 92), wherein the separation element (2) is configured and arranged in the outer housing (3) such that the outlet (4) of the outer housing (3) is bounded and the outer housing (3) is divided into a first pressure region (5) and a second pressure region (6), wherein the separation element (2) is of two-part design and a part (22) of the separation element is connected to the first or the second closure element (91, 92), and the first pressure region (5) and the second pressure region (6) are subsequently or simultaneously acted on by pressure as pressure regions independent of one another and the pressure is measured in the first pressure region (5) and the second pressure region (6).

11. A method in accordance with claim 10, wherein a testing fluid is supplied and conducted away into the second pressure region (6) by means of the middle pressure line (71, 72) and is supplied and conducted away into the first pressure region (5) by means of the high-pressure line (81, 82).

12. A method in accordance with claim 10 or 11, wherein the first pressure region (5) is pressurized with a higher pressure than the second pressure region (6).

13. A method in accordance with any one of the claims 10 to 12, wherein the separation element (2) is arranged in the outer housing (3) such that the second pressure region (6) is divided into a first pressure chamber (61) and a second pressure chamber (62).

14. A method in accordance with claim 13, wherein a common pressure level is formed in the first and second pressure chambers (61, 62).

## Revendications

1. Dispositif de contrôle pour un carter extérieur (3) d'une pompe, ledit carter extérieur (3) comportant une sortie (4), et le dispositif de contrôle (1) comportant
- un élément de séparation (2),
- un premier et un deuxième élément de fermeture (91, 92), le premier et le deuxième élément de fermeture (91, 92) obturant de manière étanche une extrémité axiale du carter extérieur (3),
**caractérisé en ce que** le dispositif de contrôle (1) comporte
- une conduite sous pression moyenne (71, 72), qui est disposée dans le premier ou le deuxième élément de fermeture (91, 92), et
- un élément de délimitation (8), ledit élément de délimitation (8) obturant la sortie (4) à l'extérieur du carter extérieur (3), et une conduite sous pression élevée (81, 82) étant disposée dans l'élément de délimitation (8),et
l'élément de séparation (2) est configuré et disposé dans le carter extérieur (3) de telle sorte que l'élément de séparation (2) délimite la sortie (4) du carter extérieur (3), et le carter extérieur (3) est divisé en une première zone de pression (5) et une deuxième zone de pression (6), la première zone de pression (5) et la deuxième zone de pression (6) étant réalisées sous forme de zones de pression indépendantes l'une de l'autre, et l'élément de séparation (2) est réalisé en deux parties et une partie (22) de l'élément de séparation est reliée au premier ou au deuxième élément de fermeture (91, 92).

2. Dispositif de contrôle selon la revendication 1, dans lequel l'élément de séparation (2) est disposé dans le carter extérieur (3) de telle sorte que la zone de pression (6) est divisée en une première chambre de pression (61) et en une deuxième chambre de pression (62).

3. Dispositif de contrôle selon la revendication 2, dans lequel la première et la deuxième chambre de pression (61, 62) sont reliées par une conduite d'équilibrage (21).

4. Dispositif de contrôle selon la revendication 3, dans lequel la conduite d'équilibrage (21) est disposée dans l'élément de séparation (2).

5. Dispositif de contrôle selon l'une quelconque des revendications précédentes, dans lequel l'élément de séparation (2) comporte une rainure périphérique et ladite rainure périphérique est disposée à la sortie (4) du carter extérieur (3).

6. Dispositif de contrôle selon l'une quelconque des revendications précédentes, dans lequel l'élément de séparation (2) est relié à un arbre (7).

7. Dispositif de contrôle selon la revendication 6, dans lequel l'arbre (7) est disposé axialement dans le carter extérieur (3) et est relié au premier et deuxième élément de fermeture (91, 92).

8. Dispositif de contrôle selon l'une quelconque des revendications précédentes, dans lequel la première zone de pression (5) et la deuxième zone de pression (6) sont séparées l'une de l'autre par un élément d'étanchéité.

9. Dispositif de contrôle selon l'une quelconque des revendications précédentes, dans lequel l'élément d'étanchéité est disposé entre l'élément de séparation (2) et le carter extérieur (3).

10. Procédé pour contrôler un carter extérieur (3) d'une pompe, ledit carter extérieur (3) comportant une sortie (4), et le dispositif de contrôle (1) comportant
- un élément de séparation (2),
- un premier élément de fermeture (91) et un deuxième élément de fermeture (92),
**caractérisé en ce que** le dispositif de contrôle (1) comporte
- une conduite sous pression moyenne (71, 72), qui est disposée dans le premier ou le deuxième élément de fermeture (91, 92),
- un élément de délimitation (8), une conduite sous pression élevée (81, 82) étant disposée dans l'élément de délimitation (8),
et respectivement une extrémité axiale du carter extérieur (3) est obturée de manière étanche par le premier et le deuxième élément de fermeture (91, 92), l'élément de séparation (2) est configuré et disposé dans le carter extérieur (3) de telle sorte que la sortie (4) du carter extérieur (3) est délimitée, et le carter extérieur (3) est divisé en une première zone de pression (5) et une deuxième zone de pression (6), dans lequel l'élément de séparation (2) est réalisé en deux parties et une partie (22) de l'élément de séparation est reliée au premier ou au deuxième élément de fermeture (91, 92), et la première zone de pression (5) et la deuxième zone de pression (6) étant sollicitées en pression l'une après l'autre ou simultanément sous forme de zones de pression indépendantes l'une de l'autre, et la pression étant mesurée dans la première zone de pression (5) et la deuxième zone de pression (6).

11. Procédé selon la revendication 10, dans lequel un fluide de contrôle est acheminé et dévié dans la deuxième zone de pression (6) via la conduite sous pression moyenne (71, 72) et est acheminé et dévié dans la première zone de pression (5) via la conduite sous pression élevée (81, 82).

12. Procédé selon la revendication 10 ou 11, dans lequel la première zone de pression (5) est sollicitée par une pression plus élevée que celle dans la deuxième zone de pression (6).

13. Procédé selon l'une quelconque des revendications 10 à 12, dans lequel l'élément de séparation (2) est disposé dans le carter extérieur (3) de telle sorte que la deuxième zone de pression (6) est divisée en une première chambre de pression (61) et en une deuxième chambre de pression (62).

14. Procédé selon la revendication 13, dans lequel un niveau de pression commun est réalisé dans la première et la deuxième chambre de pression (61,62).
